# EUROPÄISCHE PATENTSCHRIFT

(11) **EP 3 266 085 B1**
(45) Veröffentlichungstag und Bekanntmachung des Hinweises auf die Patenterteilung: **15.01.2020**
(21) Anmeldenummer: 15798030.1
(22) Anmeldetag: 18.11.2015
(51) Int. Cl.: H02G 15/068, H02G 15/188

(54) **FELDSTEUERELEMENT FÜR ENDVERSCHLÜSSE VON KABELN ZU ENERGIEÜBERTRAGUNG**
FIELD CONTROL ELEMENT FOR END CLOSURES OF CABLES FOR TRANSMITTING ENERGY
ÉLÉMENT DE COMMANDE DE CHAMP POUR FERMETURES D'EXTRÉMITÉ DE CÂBLES DE TRANSFERT D'ÉNERGIE

(30) Priorität: 03.03.2015 CH 2782015; 30.03.2015 CH 4502015; 27.04.2015 CH 5692015; 29.04.2015 CH 5882015
(43) Veröffentlichungstag der Anmeldung: 10.01.2018
(73) Patentinhaber: GRAMESPACHER, Hansjörg, CH-5417 Untersiggenthal (CH)
(72) Erfinder: GRAMESPACHER, Hansjörg, CH-5417 Untersiggenthal (CH)
(74) Vertreter: Hepp Wenger Ryffel AG
(86) Internationale Anmeldenummer: PCT/EP2015/077019
(87) Internationale Veröffentlichungsnummer: WO 2016/138970

(56) Entgegenhaltungen:
- EP-A1- 2 461 448
- DE-A1- 2 726 402
- DE-A1- 2 939 931
- DE-A1- 3 110 660

## Beschreibung

Die vorliegende Erfindung betrifft ein Feldsteuerelement für Endverschlüsse von Kabeln zu Energieübertragung gemäss den Oberbegriffen der unabhängigen Ansprüche.

Kabel zur Energieübertragung werden normalerweise im Bereich von mehreren tausend Volt, insbesondere im Bereich von 72 Kilovolt bis über 550 Kilovolt, betrieben. Die Kabel zur Energieübertragung sind dabei typischerweise von innen nach aussen folgendermassen aufgebaut:
Im Zentrum des Kabels befindet sich ein Kabelleiter aus Kupfer oder Aluminium. Dieser Kabelleiter ist von einer leitenden Schicht eingefasst. Darauf folgt eine isolierende Schicht, die wiederum von einer leitenden - auf Erdpotenzial liegenden - Polymerschicht eingefasst ist. Bei Hochspannungskabeln befinden sich über dieser Schicht im Allgemeinen die Schirmung und ein metallischer Querwasserschutz. Über dem Querwasserschutz herum befindet sich ein Mantel aus Kunststoff, der als mechanischer Schutz und Korrosionsschutz dient. In modernen Hochspannungskabeln ist die isolierende Schicht aus einem vernetzten Polyethylen (XLPE) gefertigt. Bei dem Kabel befindet sich der Leiter auf einem ersten Potenzial, typischerweise die Hoch- oder Mittelspannung, und die über der Isolierung liegende Polymerschicht mit der Schirmung auf Erdpotenzial. Zur Verbindung des Kabels mit einer Freileitung, einem Transformator oder eine gasisolierten Schaltanlage wird auf das Kabel ein Endverschluss montiert. Zur Verbindung von Kabeln untereinander werden Muffen montiert.

Die wichtigste Aufgabe von Endverschlüssen ist die Steuerung des elektrischen Feldes und die elektrische Isolierung am Ende eines Kabels. Des Weiteren sollen Endverschlüsse verhindern, dass Schmutz oder Feuchtigkeit in das Kabel gelangen.

Endverschlüsse im Allgemeinen sind aus dem Stand der Technik bereits bekannt. Ein Endverschluss wird in WO 97/09762 gezeigt. Der Endverschluss beinhaltet ein Feldsteuerelement aus isolierenden, elastischen Material, eine Leiterverbinder und einem Isolierkörper.

Bei dem Kabelendverschluss wird ein elastischer Körper auf das Kabelende aufgeschoben. Dieser elastische Körper enthält eine Elektrode mit einem Kontakt. Nach dem Aufschieben des elastischen Hauptkörpers wird ein Epoxid eingegossen. Der Nachteil dieses Kabelendverschlusses ist, dass nach dem Eingiessen des Epoxids der Kabelendverschluss nicht mehr lösbar vom Kabel ist. Ausserdem ist die Montage aufwändig und zeitintensiv.

Ein weiterer Kabelendverschluss wird im Dokument EP 1 696 517 B1 gezeigt. Die dort gezeigte Steckvorrichtung ist auf seiner gesamten Länge aus elastischem Werkstoff hergestellt. Zur Aufnahme eines Stromleiters eines aufgenommenen Kabels, ist ein Metallrohr eingelegt. Der Innendurchmesser des Metallrohrs ist grösser als der Durchmesser des Leiters. Dabei ist das Metallrohr auf demselben elektrischen Potential wie der Leiter. Um verschiedene Durchmesser des Isoliermaterials von verschiedenen Kabeln einzufügen ist eine aufwendige Konstruktion mit Adaptern notwendig. So müssen verschiedene Durchmesser-Adapter auf die Kabelisolierung aufgesetzt werden um das Kabel in eine Aufnahme der Steckvorrichtung einzufügen.

Ein anderer Kabelendverschluss wird in EP 2 259 401 B1 beschrieben. Der Endverschluss hat eine Stützfunktion und Öle (Silikonöle, Polyisobutylen) oder andere fluide Füllungen werden als Isoliermaterial verwendet. Die fluiden Füllungen erfordern eine Pumpe bei der Installation, dauerhafte Drucküberwachung und Ausgleichsgefässe. Folglich sind Wartung und Installation dieser Endverschlüsse aufgrund der fluiden Füllungen aufwändig.

DE 27 26 402 A1 zeigt eine Verbindungsmuffe für einadrige, geschirmte Starkstromkabel. Bei der Verbindungsmuffe wird ein einziger elastischer isolierter Körper aufgeschoben. Der Isolierkörper enthält eine mittig eingebettete elastische Steuerelektrode, die mit einem Verbindungsstück der Leiterenden elektrisch leitend verbunden ist. An der Außenseite weist der Isolierkörper eine elektrisch leitende Schicht auf. Weiterhin weist die Verbindungsmuffe einen metallischen Schirm auf, der mit dem Kabelschirm elektrisch verbunden ist.

DE 29 39 931 A1 zeigt eine Endmuffe für geschirmte kunststoffisolierte Starkstromkabel. Die Endmuffe enthält ein das Kabelende umgebendes metallenes Gehäuse mit einem Isolierkörper und einem Steuerelement zur Steuerung des elektrischen Feldes am Kabelende. Das metallene Gehäuse ist radial elastisch ausgebildet und am Ende einer Sackbohrung ist eine Schirmelektrode eingebettet.

DE 31 10 660 A1 zeigt eine Garnitur für das Ende eines Mittelspannungs- oder Hochspannungskabels. Die Garnitur weist einen Isolierkörper und einen Druckkörper auf. Den Druckkörper drückt mit einer vorgespannte Feder gegen eine Ringsschulter des Isolierkörpers unter Bildung eines Kontaktes mit einer Elektrode.

EP 2 461 448 A1 zeigt einen Netzabschluss für sehr hohe Spannungen. Der Abschluss weist einen zentralen Leiter auf, der von einem Isolator aus Polymer bedeckt ist. Der Isolator weist ein erstes inneres Isolierelement auf und enthält einen Deflektorleiter. Der zentrale Leiter ist an eine Ausgangsklemme angeschlossen.

Es ist daher die Aufgabe der Erfindung die Nachteile des Standes der Technik zu überwinden. Insbesondere soll ein Feldsteuerelement für Endverschlüsse von Kabeln zu Energieübertragung zur Verfügung gestellt werden, das möglichst einfach aufgebaut ist und sich vielseitig einsetzen lässt. Insbesondere die Montage soll besonders einfach sein.

Diese Aufgabe wird durch die in den unabhängigen Patentansprüchen definierten Vorrichtungen gelöst. Weitere Ausführungsformen ergeben sich aus den abhängigen Patentansprüchen.

Ein erster Aspekt der vorliegenden Erfindung betrifft ein Feldsteuerelement für Endverschlüsse von Kabeln oder Muffen zur Energieübertragung. Das Feldsteuerelement umfasst einen Hauptkörper, einen Deflektor, mindestens eine elastische Elektrode und eine Adapterplatte. Das Feldsteuerelement weist eine Öffnung auf in der ein Kabel zur Energieübertagung aufgenommen ist. Dabei ist eine der Elektrode zugewandte Seite des Kabels abisoliert. Ein leitfähiger Teil der Adapterplatte und/oder die Elektrode ist/sind so ausgebildet dass sie den abisolierten Teil des Kabels innerhalb des Feldsteuerelements über seine vollständige Länge radial umschliessen kann/können.

Der Deflektor, der Hauptkörper, die Elektrode und die Adapterplatte können bevorzugt in das Feldsteuerelement integriert sein. Dann können Deflektor, Hauptkörper, Elektrode und Adapterplatte fest und nicht zerstörungsfrei lösbar miteinander verbunden sein.

Die Adapterplatte kann aus einem festen Werkstoff bestehen. Eine Verbindung zwischen der Adapterplatte und dem Hauptkörper des Feldsteuerelements weist bevorzugt eine Grenzfläche mit einer hohen dielektrischen Festigkeit auf.

Der Deflektor ist bevorzugt leitfähig und dient der elektrischen Feldsteuerung. Der Deflektor befindet sich an einem Schildelement des Kabels und ist mit diesem elektrisch verbunden.

Der leitfähige Teil der Adapterplatte und die Elektrode sind bevorzugt elektrisch verbindbar. Dabei liegen diese auf dem Leiterpotenzial.

Dabei kann der leitfähige Teil der Adapterplatte entweder aus Metall, einem elektrisch leitfähigen Kunststoff oder aus einem isolierenden Kunststoff, der mit einer elektrisch leitfähigen Schicht ganz oder teilweise überzogen ist, bestehen.

Die Elektrode und/oder der leitfähige Teil einer Adapterplatte beinhaltet, dass ausschliesslich die Elektrode den abisolierten Teil des Kabels innerhalb des Feldsteuerelements über seine vollständige Länge radial umschliesst. In diesem Fall kann bei der Adapterplatte auf den leitfähigen Teil verzichtet werden.

Die Elektrode und/oder der leitfähige Teil einer Adapterplatte bewirken einen feldfreien Raum zwischen Kabelleiter und Elektrode und/oder dem leitfähigen Teil einer Adapterplatte. Die Elektrode muss daher nicht formschlüssig auf dem Kabelleiter aufliegen sondern es kann ein Zwischenraum zwischen Leiter und Elektrode vorhanden sein. Daher ist keine präzise Einpassung unter Vermeidung von Lufteinschlüssen nötig.

Ausserdem kann beispielsweise ein ausreichend dimensioniertes Feldsteuerelement für unterschiedliche Spannungen und unterschiedliche Kabelleiterquerschnitte verwendet werden.

Ein weiterer Vorteil liegt darin, dass eine Adapterplattenplattengrösse und eine Elektrodengrösse zur besseren Feldsteuerung und zur Ankopplung der Leiterpotenziales für alle Kabeldimensionen einer Spannungsebene benutzt werden kann.

Bevorzugt ist der elektrisch leitfähige Teil der Adapterplatte ringförmig.

Alternativ kann der elektrisch leitfähige Teil der Form des Innenleiters angepasst sein.

Bevorzugt ist die Adapterplatte direkt mit dem Hauptkörper verbindbar.

Dadurch kann eine hohe dielektrische Festigkeit der Grenzfläche zwischen der Adapterplatte und dem Hauptkörper erreicht werden.

Bevorzugt ist der Hauptkörper elastisch.

Der Hauptkörper kann aus einem elektrisch isolierenden Elastomer bestehen. Insbesondere Silikonelastomere oder Ethylen-Propylen-Rubber (EPR) oder andere Gummisorten eignen sich als Material.

Wenn die Kabelisolierung einen Durchmesser hat, der grösser ist als die Aufnahme des Feldsteuerelementes, so wird das Feldsteuerelement gedehnt. Die Dehnbarkeit des Hauptkörpers über Kabelisolationen erlaubt die Anwendungen über einen grossen Bereich von Kabelisolierungsdurchmessern von Kabeln.

Bevorzugt ist der Deflektor elastisch.

Der Deflektor kann aus einem elektrisch leitenden Elastomer bestehen. Insbesondere Silikonelastomere, Ethylen-Propylen Dien Rubber (EPDM) oder Ethylen-Propylen-Rubber (EPR) oder andere Gummisorten eignen sich als Material.

Ein elastischer Deflektor hat den Vorteil, dass der Hauptkörper sich einfacher dehnen lässt und daher einfacher auf das Kabel aufschiebbar ist.

Dadurch kann der Deflektor das elektrische Feld steuern und einen elektrischen Potentialgradienten verringern.

Der Deflektor kann mit einer über der Kabelisolierung und auf Erdpotenzial liegenden leitfähigen Schicht verbunden sein. Der Deflektor kann ähnlich wie ein Trichter geformt sein und dabei eine gekrümmte Form annehmen.

Bevorzugt bestehen der Hauptkörper, der Deflektor und die Elektrode ganz oder teilweise aus Silikonelastomeren.

Das hat den Vorteil dass der Deflektor und die Elektrode flexibel sind.

Bevorzugt ist die Adapterplatte beabstandet zu einer Kabelisolation angeordnet.

Da der adapterplattenseitige Teil des Feldsteuerelementes über dem Kabelleiter aufgrund der Beabstandung nicht oder nur sehr gering gedehnt werden kann, kann in diesem Bereich während einer Anwendung eines Feldsteuerelement keine oder nur eine sehr geringe Verformung des Hauptkörpers auftreten. Dies kann bedeuten, dass die Grenzfläche zwischen dem Hauptkörper und der festen Adapterplatte nicht oder nur sehr gering mechanisch belastet wird. Die feste Adapterplatte erlaubt nun eine Montage von Weiteren Bauteilen, z.B. von Isolatoren, bei gleichzeitig hoher dielektrischer Festigkeit der Grenzfläche zwischen Adapterplatte und dem Hauptkörper.

Weiterhin wird durch die beabstandete Anordnung die dielektrische Beanspruchung der Grenzfläche zwischen Hauptkörper und Adapterplatte reduziert.

Bevorzugt ist die Elektrode elektrisch mit einem Leiter des Kabels verbindbar.

Dies hat den Vorteil, dass der Raum zwischen Leiter und Elektrode feldfrei ist und keine Spannungsdurchschläge entstehen können.

Weiterhin bevorzugt sind Leiter und Elektrode durch eine Metallhülse oder eine Spiralfeder verbindbar.

Metallhülsen oder Spiralfedern sind besonders einfache Mittel, um eine elektrische Verbindung zwischen Elektrode und Leiter herzustellen.

Alternativ eignen sich auch Kontaktstifte, Federn, leitende Elastomere oder ähnliche elektrisch leitfähige und flexible Konstruktionen die eine Verbindung zwischen Leiter und Elektrode herstellen.

Bevorzugt enthält die Adapterplatte einen elektrisch isolierenden Kunststoff.

Besonders bevorzugt enthält die Adapterplatte ein Harz, ein Thermoplast oder einen Verbundwerkstoff.

Die genannten Werkstoffe haben den Vorteil dass sie elektrisch isolierend sind und gleichzeitig eine hohe mechanische Festigkeit aufweisen.

Bevorzugt ist ein Isolator mit dem Feldsteuerelement verbindbar.

Der Isolator dient der Verlängerung eines Kriechweges. Der Kriechweg bezeichnet die Weglänge zwischen zwei Elektroden längs der Oberflächenkontur eines Isolators. Bevorzugt wird der Isolator an der Adapterplatte befestigt. Beispiele für Isolatoren, die sich anschliessen lassen sind rohrförmige Isolatoren oder plattenförmige Isolatoren, wie zum Beispiel in gasisolierten Schaltanlagen (GIS).

Bevorzugt verläuft eine Grenzfläche zwischen dem Feldsteuerelement und dem Isolator oder einer Isolatorplatte senkrecht zur Kabelachse.

Dadurch kann der Isolator oder die Isolatorplatte besonders einfach montiert werden.

Besonders bevorzugt verläuft die Grenzfläche zwischen dem Feldsteuerelement und dem Isolator oder der Isolatorenplatte in einem Winkel zwischen 45° und 90° zur Kabelachse.

Ein Vorteil einer solchen Grenzfläche ist, dass die dielektrische Beanspruchung der Grenzfläche reduziert wird.

Bevorzugt ist auf einer Oberfläche der Adapterplatte eine flexible Schicht angeordnet.

Die flexible Schicht erhöht eine dielektrische Festigkeit zwischen Adapterplatte und z.B. den darauf montierbaren Isolatoren. Weiterhin kann die Schicht geringe Unebenheiten der Adapterplatte oder geringe Unebenheiten eines darauf montierbaren Isolators ausgleichen.

Bevorzugt ist ein Innenquerschnitt des Feldsteuerelements auf einer Seite des Deflektors grösser als auf einer Seite der Adapterplatte.

Im Bereich der Kabelisolation kann das Feldsteuerelement gedehnt werden. Die resultierenden inneren mechanischen Spannungen werden durch den grösseren Innenquerschnitt abgebaut.

Bevorzugt beträgt eine Differenz vom Innendurchmesser zwischen den beiden Enden des Feldsteuerelementes mindestens 2 Millimeter, bevorzugt mindestens 4 Millimeter.

Dadurch wird sichergestellt, dass der Spannungsabbau wirksam ist. Eine maximale Differenz ist die Dicke der Kabelisolation.

Bevorzugt enthält die äussere Form des Feldsteuerelements schirmartige Strukturen.

Dadurch kann der Kriechweg verlängert werden.

Bevorzugt ist eine Oberfläche des Feldsteuerelements ganz oder teilweise mit einer Schicht aus feldsteuerndem Material mit nicht linearem Widerstand versehen.

Typischerweise sind nicht-lineare Feldsteuermaterialien mit dotierten und gesinterten ZnO Teilchen gefüllte Polymere. Ein Beispiel eines nicht-linearen Feldsteuermateriales wird in US 2005/218380 A1 gezeigt. Ein Vorteil nicht-linearer Feldsteuermaterialien ist, dass sie sich die elektrischen Eigenschaften durch die Dotierstoffe und die Sinterbedingungen gezielt einstellen lassen. Ein anderes nicht-lineares Feldsteuermaterial ist ein mit Russ gefülltes Polyethylen, wobei der Russgehalt so gewählt werden muss, dass sich der elektrische Widerstand in dem Bereich des Übergangs von einem isolierenden Material zu einem leitfähigen Material befindet (Perkolationsschwelle).

Weiterhin bevorzugt ist eine Oberfläche des Feldsteuerelementes ganz oder teilweise mit einer elektrisch leitfähigen Schicht versehen. Besonders bevorzugt weist die Oberfläche die leitfähige Schicht bei der Anwendung in gasisolierten Schaltanlagen oder bei Muffen auf.

Vorzugsweise liegt die Schicht in der Anwendung auf Erdpotenzial. Dadurch wird sichergestellt, dass in einem Zwischenraum zwischen dem Feldsteuerelement und einem äusseren Gehäuse, beispielsweis ein Gehäuse einer gasisolierten Schaltanlage, in dem sich Luft befinden kann, kein elektrisches Feld auftritt.

In einem weiteren Aspekt der vorliegenden Erfindung umfasst eine gasisolierte Schaltanlage ein Feldsteuerelement.

Bevorzugt enthält die Adapterplatte mindestens zwei Elektroden.

Dadurch kann eine äussere leitfähige Schicht mit der gasisolierten Schaltanlage verbunden werden. Zusätzlich kann auch die elastische Elektrode mit der gasisolierten Schaltanlage verbunden werden.

In einem weiteren Aspekt der vorliegenden Erfindung umfasst eine Muffe für die Verbindung vom Kabel zur Energieübertragung, welche mindestens zwei Feldsteuerelemente umfasst.

Bevorzugt ist die Muffe mindestens zweiteilig aufgebaut.

Die mindestens zwei Teile können auf jeweils ein Kabelende aufgeschoben werden. Dadurch kann die Muffe kürzer sein und daher Material und Aufwand gespart werden. Weiterhin ist ein Montageaufwand gering, da die mindestens zwei Feldsteuerelemente nur einen kurzen Weg auf das jeweilige Kabel aufgeschoben werden. Damit wird der Arbeitsaufwand bei der Kabelpräparation vermindert.

Bevorzugt beinhaltet die Muffe mindestens ein Zwischenstück.

Bevorzugt beinhaltet das Zwischenstück eine Elektrode.

Bevorzugt beinhaltet das Zwischenstück einen mechanisch festen Isolierstoff.

Dies hat den Vorteil, dass das Zwischenstück beim Verbinden mit den Feldsteuerelementen und während des Betriebes sich nicht verformt.

Bevorzugt verläuft eine Grenzfläche zwischen zwei Feldsteuerelementen oder einer Grenzfläche zwischen einem Feldsteuerelement und dem Zwischenstück senkrecht zur Kabelachse.

Besonders bevorzugt verläuft eine Grenzfläche zwischen zwei Feldsteuerelementen oder einer Grenzfläche zwischen einem Feldsteuerelement und dem Zwischenstück in einem Winkel zwischen 45° und 90° zur Kabelachse.

Dies hat den Vorteil, dass die elektrische Beanspruchung der Grenzfläche reduziert werden kann.

Ein weiterer Aspekt der Erfindung umfasst ein Modul für ein Feldsteuerelement. Das Modul umfasst einen elektrisch leitfähigen Innenteil, eine elektrische Isolierung und einen mechanischstabilen Träger. Die elektrische Isolierung umfasst den Innenteil. Dabei ist der Innenteil elektrisch zu einem Feldsteuerelement verbindbar.

Der mechanisch stabile Träger gibt dem Modul eine mechanische Steifigkeit und stützt das Modul. Dabei kann der Träger eines Modules mehrere übereinander gestapelte Module tragen. Der mechanisch-stabile Träger kann alternativ auch durch das Innenteil gebildet werden. Ausserdem kann der Träger das Modul ummanteln.

Vorzugsweise beinhaltet der Träger einen mechanisch stabilen Kunststoff, wie z.B. einem mit Glasfasern verstärkten Harz oder einem mechanisch und thermisch stabilen Thermoplast.

Das Innenteil des Moduls kann auf einem Leiterpotential liegen, da es elektrisch verbindbar ist mit dem Feldsteuerelement. Dies hat den Vorteil, dass das Innenteil nicht formschlüssig mit einem Kabelleiter verbunden werden muss.

Die elektrische Isolierung kann aus einem elektrisch isolierenden Kunststoff oder einer Mischung von Kunststoffen mit Füllstoffen bestehen.

Ein Vorteil des Modules ist, dass es auch erst bei der Montage des Feldsteuerelements ein Kabel zur Energieübertragung montiert werden kann. Dadurch können das Modul und das Feldsteuerelement getrennt voneinander gefertigt und geliefert werden.

Zusätzlich können die Module bei der Montage des Feldsteuerelementes getrennt montiert werden. Dadurch reduziert sich ein maximales Gewicht einzelner Teile und der aufwändige Einsatz eines Kranes kann vermieden werden.

Ein weiterer Vorteil des Modules ist, dass es direkt nach der Fertigung beim Hersteller geprüft werden kann.

Im Gegensatz zu konventionellen Freiluftendverschlüssen muss der Endverschluss nur über ungefähr die Länge des Feldsteuerelementes über das Kabel geschoben werden. Bei konventionellen Endverschlüssen muss das Feldsteuerelement über die gesamte Länge des Endverschlusses aufgeschoben werden.

Bevorzugt ist ein erstes Modul zu einem zweiten Modul verbindbar.

Dadurch kann ein Kriechweg flexibel über eine Anzahl an Modulen eingestellt werden. Weiterhin können statt einen langem Modul mehrere kurze verwendet werden. Diese sind leichter handhabbar und montierbar aufgrund des kleineren Gewichtes und der kleineren Grösse.

Bevorzugt ist eine axiale Länge eines Moduls einstellbar.

Dadurch kann ein Kriechweg flexibel über die axiale Länge eines Modules eingestellt werden. Weiterhin kann der durch eine Kombination von Modulen verschiedener Länge eine Vielzahl von Kriechwegen eingestellt werden. Daher kann für jede Anwendung der passende Kriechweg ausgewählt werden.

Bevorzugt sind das Feldsteuerelement und das mindestens eine Modul durch einen Adapter verbindbar.

Bevorzugt enthält die äussere Form des Moduls schirmartige Strukturen.

Dadurch kann der Kriechweg erhöht werden.

Bevorzugt ist eine Grenzfläche zwischen dem mindestens einem Modul und dem Feldsteuerelement und/oder einem weiteren Modul gekrümmt.

Dadurch verläuft eine Grenzfläche zwischen den einzelnen Modulen nicht senkrecht zur Richtung des Kabelleiters und die dielektrische Beanspruchung der Grenzfläche wird reduziert.

Bevorzugt ist eine Grenzfläche zwischen dem mindestens einem Modul und dem Feldsteuerelement und/oder einem weiteren Modul schräg zu einer Ebene senkrecht zur Richtung des Kabelrohrleiters anordbar.

Dadurch verläuft eine Grenzfläche zwischen den einzelnen Modulen nicht senkrecht zur Richtung des Kabelleiters und die dielektrische Beanspruchung der Grenzfläche wird reduziert.

Anhand von Figuren, welche lediglich Ausführungsbeispiele darstellen, wird die Erfindung im Folgenden näher erläutert. Es zeigen schematisch:
- Figur 1A:: Eine schematische Darstellung eines auf einem Kabelende montierten Feldsteuerelementes,
- Figur 1B:: eine Detailansicht von Figur 1A,
- Figur 2:: eine schematische Darstellung einer weiteren Ausführungsform eines auf ein Kabelende montierten Feldsteuerelementes,
- Figur 3:: eine schematische Darstellung eines Feldsteuerelementes mit angebrachtem Isolator,
- Figur 4A:: eine schematische Darstellung einer Muffe zum Verbinden von zwei Kabelenden,
- Figur 4B:: eine Detailansicht der schematischen Darstellung einer Muffe aus Figur 4A,
- Figur 4C:: eine schematische Darstellung einer Detailansicht einer weiteren Ausführungsform einer Muffe,
- Figur 5:: eine schematische Darstellung eines Feldsteuerelementes, das an eine gasisolierte Schaltanlage angeschlossen ist,
- Figur 6:: eine Detailansicht eines Feldsteuerelementes nach Figur 5,
- Figur 7:: eine schematische Darstellung eines Endverschlusses mit Modulen,
- Figur 8:: eine schematische Darstellung eines Modul eines Endverschlusses,
- Figur 9:: eine schematische Darstellung einer weiteren Ausführungsform eines Endverschlusses mit einem Feldsteuerelement, Modulen und Isolatoren
- Figur 10:: eine schematische Darstellung einer weiteren Ausführungsform eines Endverschlusses mit einem Feldsteuerelement, Modulen und Isolatoren.

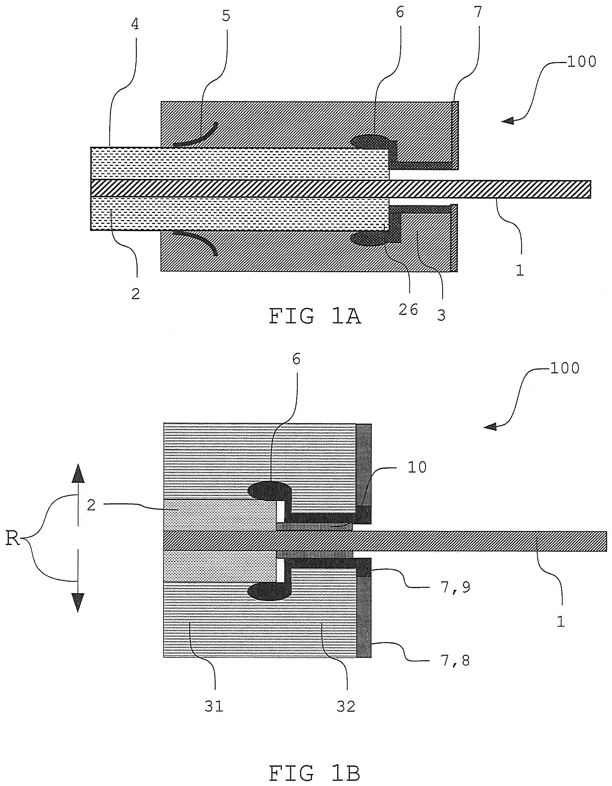

Figur 1A zeigt eine schematische Darstellung eines Feldsteuerelementes 100 für Endverschlüsse von Kabeln. Das Kabel umfasst dabei mindestens einen Kabelleiter 1 und eine Kabelisolation 2. Die Kabelisolierung ist umhüllt vom Kabelschirm 4. Das Feldsteuerelement 100 umfasst einen Hauptkörper 3, einen Deflektor 5, eine Elektrode 6 und eine Adapterplatte 7. Der Hauptkörper 3, die Elektrode 6 und der Deflektor 5 sind aus einem elastischen Material. Bevorzugt ist das elastische Material ein Elastomer. Der Deflektor 5 ist mit einem Kabelschirm 4 verbunden. Dabei liegt der äussere Schirm und der Deflektor auf Erdpotential. Die Elektrode 6 ist mit der Adapterplatte 7 verbunden. Wenn das Feldsteuerelement 100 auf die Kabelisolation 2 aufgeschoben wird, dehnt sich das Elastomer des Hauptkörpers 3 auseinander. Ebenso dehnen sich dabei der Deflektor 5 und die Elektrode 6. Die Adapterplatte 7 ist aus einem mechanisch-festem Werkstoff gefertigt. Durch die elastische Verformung des Hauptkörpers 3 und der Elektrode 6 ist die Verbindung zwischen der Adapterplatte 7 und dem Hauptkörper 3 einer mechanischen Scherspannung ausgesetzt. Um diese mechanische Spannung gering zu halten, ist zwischen einer Absetzkante 26 der Kabelisolation und der Adapterplatte 7 ein Abstand. Dadurch sind die mechanischen Spannungen, die auf den Übergang zwischen Hauptkörper 3 und Adapterplatte 7 wirken, gering. Das Feldsteuerelement 100 ist bei Gleichspannung und bei Wechselspannung einsetzbar.

Ein weiterer Vorteil ist, dass der Aufwand für Produktion und Logistik reduziert werden kann. Der Hauptkörper 3, die Elektrode 6 und der Deflektor 5 sind aus einem Elastomer. Die Dehnbarkeit des Elastomers über der Kabelisolation 2 erlaubt, die Anwendung über einen grossen Bereich von unterschiedlichen Leiterdurchmessern.

Der Hauptkörper 3, die Elektrode 6, Adapterplatte 7 und der Deflektor 5 werden bei der Herstellung in der Fabrik zusammengesetzt. Dadurch wird verhindert, dass Staub oder Schmutz zwischen elektrisch beanspruchte Grenzflächen kommt.

Figur 1B zeigt im Detail die Verbindung der Adapterplatte 7. Der Hauptkörper 3 hat einen gedehnten Bereich 31 und einen ungedehnten bzw. geringfügig gedehnten Bereich 32. Die Adapterplatte weist einen elektrisch-isolierenden Teil 8 und einen elektrisch-leitfähigen Teil 9 auf. Der elektrisch isolierende Teil 8 ist in einer radialen Richtung R aussen angeordnet. Ein Vorteil der vorliegenden Erfindung ist, dass zwischen dem abisolierten Kabelleiter 1 und dem Hauptkörper 3 keine formschlüssige Verbindung hergestellt werden muss. Dieser Vorteil entsteht da die Elektrode 3 und der leitfähige Teil 9 der Adapterplatte 7 elektrisch mit dem Kabelleiter 1 verbunden sind. Diese Verbindung wird hergestellt durch eine Hülse 10. Diese Hülse 10 koppelt das Leiterpotential an die Elektrode und an den elektrisch-leitfähigen inneren Ring der Adapterplatte.

Das Feldsteuerelement 100 mit Deflektor, Elektrode und Adapterplatte kann nach der Fertigung als ein integrales Bauteil angesehen werden. Das Feldsteuerelement soll als ein Stück zum Kunden geliefert werden.

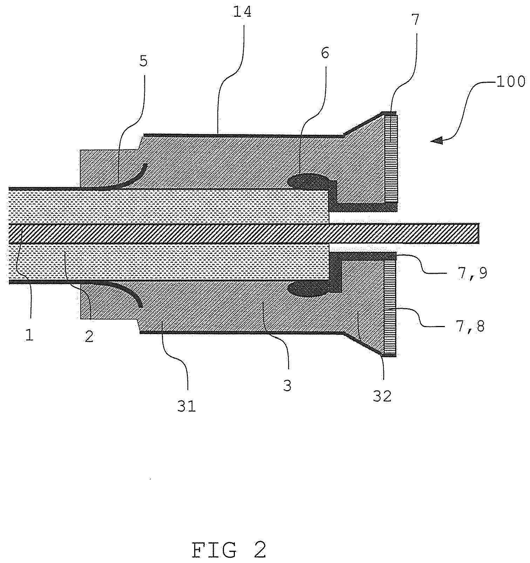

Eine weitere Ausführungsform eines Feldsteuerelementes 100 wird in Figur 2 gezeigt. Ein Deflektor 5 des Feldsteuerelementes 100 ist verbunden zu einem Schirm eines Kabels. Das Kabel beinhaltet einen Kabelleiter 1 und eine Kabelisolation 2. Ein Hauptkörper 3 des Feldsteuerelementes 100 weist einen gedehnten Bereich 31 sowie einen ungedehnten Bereich 32 auf. Eine Adapterplatte weist einen elektrisch-leitfähigen Teil 9 sowie einen nichtelektrisch-leitfähigen Teil 8 auf. Der elektrisch-leitfähige Teil 9 kann dabei ringförmig angeordnet sein. Der elektrisch leitfähige Teil 9 ist mit einer Elektrode 6 verbunden. Die Elektrode 6 ist elastisch. Weiterhin enthält das Feldsteuerelement aus Figur 2 eine äussere Schicht 14. Auch die Schicht 14 ist leitfähig und liegt auf dem Erdpotential. Alternativ kann auch eine Schicht 14 mit einem nicht-linearen Widerstand aufgetragen werden. Natürlich kann eine Schicht 14 wie in Figur 2 beschrieben auch in allen anderen beschriebenen Ausführungsbeispielen ein nicht-lineares Material beinhalten.

Das Feldsteuerelement 100 weist dabei einen grösseren Querschnitt in einem Bereich auf der Seite der Adapterplatte auf, als in einem Bereich auf der Seite der Kabelisolierung. Diese Anordnung ist vorteilhaft für eine Feldverteilung.

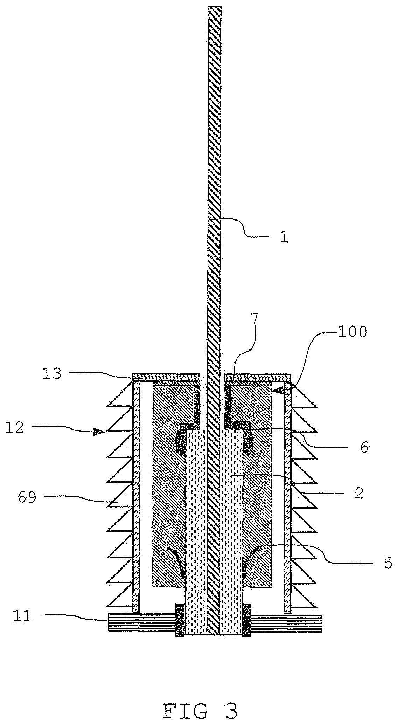

Figur 3 zeigt ein Feldsteuerelement 100 mit einem Isolator 12. Der Isolator 12 wird durch eine Isolierplatte 13 mit der Adapterplatte 7 des Feldsteuerelementes 100 verbunden. Dadurch kann das Feldsteuerelement 100 mit einer Grundplatte 11 verbunden werden. Um den Kriechweg weiter zu erhöhen kann der Isolator 12 schirmartige Strukturen 69 aufweisen.

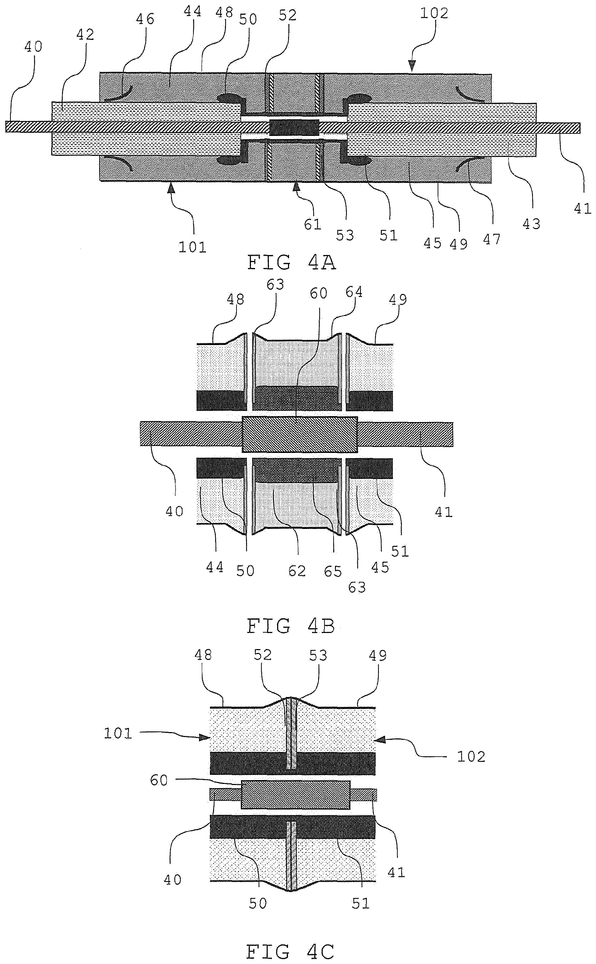

In den Figuren 4A bis 4C werden verschiedene Ausführungsformen einer Muffe gezeigt. Mittels einer Muffe sollen zwei Kabelendstücke verbunden werden. Dabei ist die Muffe prinzipiell aus zwei gegenüberliegenden Feldsteuerelementen 101, 102 aufgebaut. Die Feldsteuerelemente 101, 102 sind im Wesentlichen identisch zu den Feldsteuerelementen 100. Die beiden Kabelenden enthalten jeweils einen Kabelleiter 40, 41 sowie eine Kabelisolation 42, 43. Die Feldsteuerelemente enthalten jeweils einen Hauptkörper 44, 45, einen Deflektor 46, 47, eine Elektrode 50, 51 und eine leitfähige Schicht an der Aussenseite 48, 49. Zusätzlich enthalten beide Feldsteuerelemente 101, 102 eine Adapterplatte 52, 53. Zwischen den beiden Feldsteuerelementen 101, 102 ist ein Zwischenstück 61 angeordnet.

Eine Detailansicht des Zwischenstücks 61 ist in Figur 4B gezeigt. Die beiden Kabelleiter 40, 41 werden über ein Leiterverbinder 60 verbunden. Das Zwischenstück 61 beinhaltet eine Isolation 62, eine Elektrode 65 und zwei Adapterplatten 63. Die Adapterplatten 63 sind derart angeordnet, dass sie gegenüber zur Adapterplatte 52 des ersten Feldsteuerelementes 101 und gegenüber zur Adapterplatte 53 des zweiten Feldsteuerelementes 102 angeordnet sind. Die Elektrode 65 ist elektrisch verbindbar zu den Elektroden 50, 51 der beiden Feldsteuerelemente 101, 102.

Die aus Elastomeren bestehenden Elektroden 50, 51 können elektrisch durch den mechanischen Druck verbunden werden.

Weiterhin verfügt das Zwischenstück über eine elektrisch leitfähige Schicht 64. Die elektrisch leitfähige Schicht 64 ist elektrisch verbindbar mit den elektrisch leitfähigen Schichten 48, 49 der Feldsteuerelemente.

Die leitfähigen Schichten 48 und 64 sowie 49 und 64 können jeweils durch elastische elektrisch leitfähige Bänder, die um die Feldsteuerelemente gewickelt werden, elektrisch verbunden werden.

Wie bei den Feldsteuerelementen 100 muss der Kabelleiter 40 und der Kabelleiter 41 sowie das Leiterverbinder 60 nicht vollständig und formschlüssig von den Elektroden 50, 51, 65 umschlossen werden. Da die Elektroden 50, 51, 65 auf demselben Potential liegen wie der Leiter entsteht kein Risiko eines Durchschlages zwischen Leiter und Elektroden oder dem Leiterverbinder 60 und den Elektroden. Dadurch können mit einer Muffe Leiter verschiedener Durchmesser verbunden werden.

Wenn die Muffe montiert wird, werden zunächst die Feldsteuerelemente 101, 102 auf die Kabelenden aufgeschoben. Dann werden die beiden Kabelleiter 40, 41 mit dem Leiterverbinder 60 verbunden. Anschliessend wird das aus zwei Teilen bestehende Zwischenstück 61 über dem Leiterverbinder zusammengefügt. Danach wird das Zwischenstück 61 mit den beiden Feldsteuerelementen verbunden.

Eine weitere Ausführungsform einer Muffe ist im Detail in Figur 4C gezeigt. Dabei wird auf ein Zwischenstück 61 verzichtet und die beiden Feldsteuerelemente 101, 102 werden direkt miteinander verbunden. Die beiden Kabelleiter 40, 41 werden über ein Verbindungselement 60 miteinander verbunden. Ebenfalls miteinander verbunden sind die beiden Elektroden 50, 51 sowie die leitfähigen Schichten 48, 49 der Feldsteuerelemente.

Die Verbindungen sind entweder durch Kleben oder durch ein Gewinde oder durch einen Bajonettverschluss hergestellt. Eine weitere Verbindungsmöglichkeit ist ein zusätzlicher Ring der die Adapterplatten 52 und 63 sowie 53 und 63 mechanisch zusammendrückt.

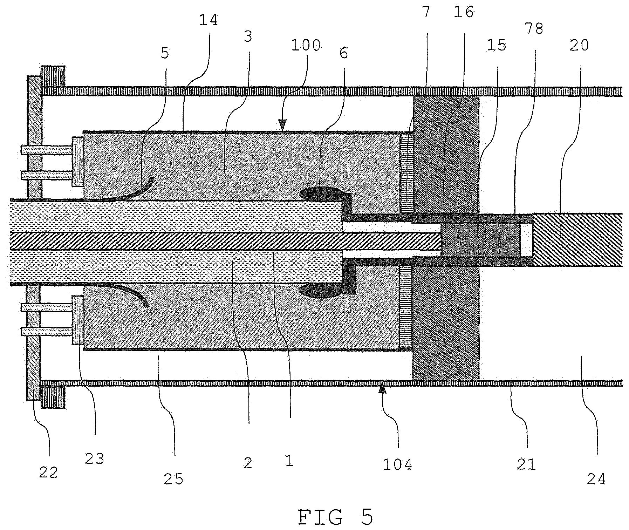

In Fig. 5 wird eine schematische Darstellung eines Feldsteuerelementes 100, das an eine gasisolierte Schaltanlage angeschlossen ist, gezeigt. Das Feldsteuerelement beinhaltet einen Hauptkörper 3, einen Deflektor 5, eine Elektrode 6 und eine Adapterplatte 7. Weiterhin ist eine leitfähige Schicht 14 auf der Aussenseite des Feldsteuerelementes 100 aufgebracht. Das Feldsteuerelement 100 nimmt ein Kabel mit einer Kabelisolation 2 und einem Leiter 1 auf. Das Kabel führt durch einen Innendurchmesser des Feldsteuerelementes 100. Vorzugsweise ist der Innendurchmesser so zu wählen, dass auch ein Kabelleiter 1 mit einem Leiterquerschnitt von 2500 mm² hindurch passt.

Die gasisolierte Schaltanlage 104 beinhaltet ein Metallgehäuse 21, eine Halterungsplatte 22, einen Stempelring 23, eine Isolierplatte 16, ein Leiterrohr 78 und einen stromführenden Leiter 20. Das Metallgehäuse 21 und die Halterungsplatte formen einen Raum 25 in dem das Feldsteuerelement 100 angeordnet ist. Das Feldsteuerelement 100 befindet sich innerhalb des Raumes 25 und wird gegen die Isolierplatte 16 gepresst. Der Anpressdruck des Feldsteuerelementes 100 auf die Isolierplatte wird durch den Stempelring 23, der mechanisch mit dem Gehäuse 21 der Schaltanlage 104 verbunden ist, aufgebracht. Diese Verbindung zwischen Stempelring und Metallgehäuse 21 kann über ein Federelement erfolgen. Somit wird sichergestellt, dass immer ein voreingestellter Anpressdruck über den Stempelring 23 auf das Feldsteuerelement 100 wirkt. Idealerweise ist dieser Anpressdruck mit Hilfe des Federelementes einstellbar. Der Anpressdruck bewirkt dass eine Grenzfläche zwischen Adapterplatte 7 und Isolierplatte 16 eine hohe dielektrische Festigkeit aufweist und keine Lufteinschlüsse entstehen.

Das Metallgehäuse 21 und die leitfähige Schicht 14 sind beide auf Erdpotential. Dadurch ist der Raum 25 feldfrei und muss nicht mit einem Schutzgas befüllt werden sondern kann auch Luft enthalten.

Eine elektrische Verbindung zwischen gasisolierter Schaltanlage 104 und Kabelleiter 1 wird durch einen Lamellenkontakt 15 hergestellt. Der Lamellenkontakt 15 leitet den elektrischen Strom auf das Leiterrohr 78. Diese ist dann mit einem stromführenden Leiter 20 der gasisolierten Schaltanlage verbunden. In dem geschlossenen Raum zwischen Metallgehäuse 21 und Isolierplatte 25 ist ein Schutzgas 24 enthalten. Typischerweise wird Schwefelhexafluorid (SF₆) als Schutzgas verwendet.

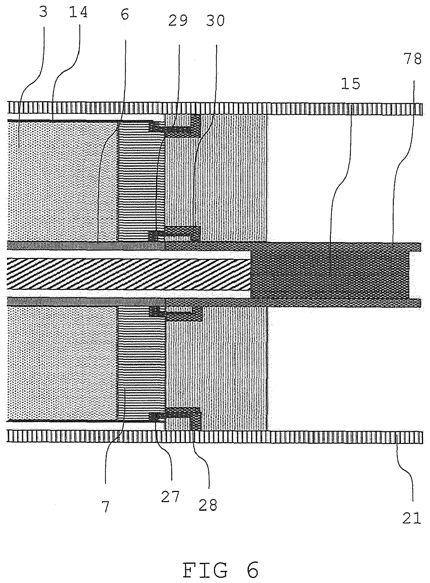

Figur 6 ist eine Detailansicht von Figur 5. In Fig. 6 wird die Verbindung zwischen Adapterplatte 7 und Isolierplatte 16 gezeigt. Die leitfähige Schicht 14 wird über eine in die Adapterplatte 7 integrierte Elektrode 27 und eine in die Isolierplatte 16 integrierte Elektrode 28 elektrisch mit dem Metallgehäuse 21 verbunden. Um einen sicheren elektrischen Kontakt zwischen Leiterrohr 78 und Elektrode 6 herzustellen sind die Elektroden 29 und 30 vorgesehen. Die Elektrode 29 ist in die Adapterplatte 7 integriert und die Elektrode 30 in die Isolierplatte 16.

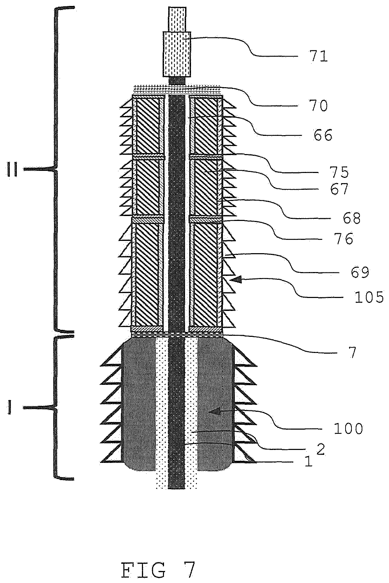

Figur 7 ist eine schematische Darstellung eines Endverschlusses mit Modulen. Zur besseren Übersicht sind zwei Teile I und II in der Figur 7 markiert. Im Teil I ist das Feldsteuerelement 100 und im Teil II sind drei gleichartige Module gezeigt. Das Feldsteuerelement 100 ist in Figur 7 vereinfacht gezeichnet. Das Feldsteuerelement in dem Endverschluss mit Modulen ist ein Feldsteuerelement wie in Figur 1 oder Figur 2 gezeigt wurde.

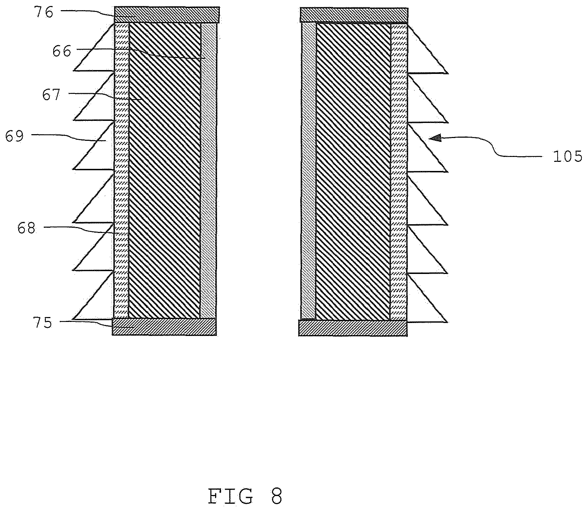

Figur 8 zeigt eines der Module des Teiles II im Detail. Die Module sind gleichartig aufgebaut. Dabei beinhaltet ein Modul 105 ein elektrisch leitfähiges Innenrohr 66, eine elektrische Isolierung 67, eine Modulwand 68 und Schirme 69. Das Modul 105 wird abgeschlossen durch einen Boden 75 und einen Deckel 76. Die Modulwand 68 besteht aus einem mit Glasfasern gefüllten Harz und dient als mechanisch stabiler Träger des Deckels. Durch die Festigkeit der Modulwand 68 können mehrere Module übereinander gestapelt werden. Die Schirme 69 verlängern den Kriechweg.

Da sowohl die Adapterplatte 7 innen ein leitfähiges Material und die Isolatoren ebenfalls ein leitfähiges Material besitzen, können die Adapterplatte 7 des Feldsteuerelementes 100 mit den Isolatoren im Bereich der elektrisch leitfähigen Materialien mit metallischen Schrauben verbunden werden, ohne dass die elektrische Feldverteilung gestört wird. Eine andere Möglichkeit besteht darin, dass der leitfähige (am besten metallische) Teil 9 der Adapterplatte mehrere Öffnungen auf weisst, in die die entsprechenden ebenfalls leitfähigen Gegenstücke der Isolatoren, bzw. der Isolatorplatte gedrückt werden. Durch kurzes Drehen der Module gegenüber dem Feldsteuerelement kann dann der Isolator mit der Adapterplatte fixiert werden (Bajonettverschluss). Ein weiteres Verbindungsmittel ist Kleben der beiden Platten.

Die elektrisch leitfähigen Innenrohre 66 der Module sind untereinander durch metallische Schrauben an den Rohrenden oder durch ein Gewinde oder durch einen Bajonettverschluss verbunden (nicht in Fig. 7 gezeigt).

Das elektrisch leitfähige Innenrohr 66 ist verbunden mit einer Elektrode des Feldsteuerelementes oder dem leitfähigen Teil 9 der Adapterplatte 7. Das leitfähige Innenrohr 66 liegt dadurch auf demselben Potential wie der Leiter 1. Daher ist der Zwischenraum zwischen Leiter und Modul feldfrei und das Innenrohr muss nicht formschlüssig am Leiter 1 anliegen.

Ein Modul 105 kann mit der Adapterplatte 7 eines Feldsteuerelementes mechanisch und elektrisch verbunden werden. Weiterhin kann an ein erstes Modul weitere Module angeschlossen werden. Der Kriechweg kann dann einfach über die Anzahl an Modulen an die Anforderungen (Umgebung, Spannung, Vorschriften, Normen) angepasst werden. Module mit unterschiedlichen axialen Längen können miteinander kombiniert werden. Ausserdem können die Durchmesser Module den Anforderungen angepasst gefertigt werden.

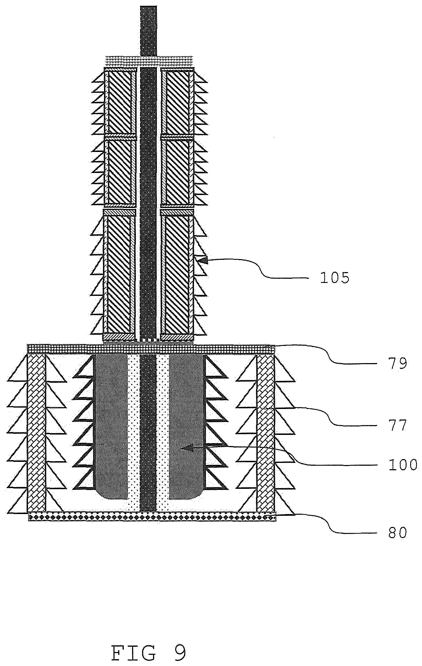

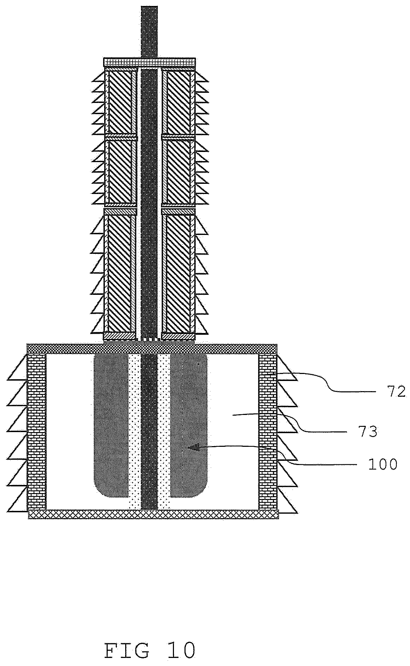

Figuren 9 und 10 zeigen weitere vorteilhafte Ausführungsformen. In der Ausführungsform in Figur 9 ist das Feldsteuerelement 100 von einem beschirmten Isolator 77 umgeben. Der Isolator 77 umfasst eine Grundplatte 80 und ein Deckelement 79. In dieser Ausführungsform kann die elektrische Verbindung zwischen Elektrode 6 des Feldsteuerelementes 100 auch indirekt hergestellt werden. Dabei wird der elektrisch leitfähige Teil 9 über ein zusätzlich leitendes Teil oder einen leitenden Teil des Deckelements 79 mit dem Innenrohr 66 verbunden.

Figur 10 zeigt eine Ausführungsform eines modular aufgebauten Endverschlusses bei dem die Stabilität des unteren Teils des Endverschlusses durch ein stabiles Rohrelement 72, welches ebenfalls mit Schirmen versehen sein kann, gegeben ist. Die Wand des Rohrelementes kann aus einem mechanisch stabilen Kunststoff wie z.B. einem mit Glasfasern gefüllten Harz bestehen. Der Zwischenraum 73 zwischen Kabelader mit Feldsteuerelement 100 und dem stabilen Rohrelement kann aus Luft bestehen.

## Patentansprüche

1. Feldsteuerelement (100) für Endverschlüsse oder Muffen von Kabeln zur Energieübertragung, wobei das Feldsteuerelement (100) einen Hauptkörper (3), einen Deflektor (5), mindestens eine elastische Elektrode (6) und eine Öffnung zur Aufnahme eines Kabels zur Energieübertragung aufweist und wobei ein der Elektrode (6) zugewandter Endbereich des Kabels abisoliert ist, **dadurch gekennzeichnet, dass** das Feldsteuerelement eine Adapterplatte (7) aufweist, die mindestens in einem radial aussenliegenden Bereich isolierend ist, wobei ein leitfähiger Teil (9) der Adapterplatte (7) und/oder die Elektrode (6) so ausgebildet ist/sind, dass sie den abisolierten Teil des Kabels innerhalb des Feldsteuerelements (100) über seine vollständige Länge radial umschliessen kann/können.

2. Feldsteuerelement (100) nach Anspruch 1, **dadurch gekennzeichnet, dass** der elektrische leitfähige Teil (9) der Adapterplatte (7) ringförmig ist.

3. Feldsteuerelement (100) nach einem der vorherigen Ansprüche, **dadurch gekennzeichnet, dass** die Adapterplatte (7) direkt mit dem Hauptkörper (3) verbindbar ist, wobei der Hauptkörper (3) bevorzugt elastisch ist.

4. Feldsteuerelement (100) nach einem der vorherigen Ansprüche, **dadurch gekennzeichnet, dass** die Adapterplatte (7) beabstandet zu einer Kabelisolierung (2) angeordnet ist.

5. Feldsteuerelement (100) nach einem der vorherigen Ansprüche, **dadurch gekennzeichnet, dass** die Elektrode (6) elektrisch mit einem Leiter (1) des Kabels verbindbar ist.

6. Feldsteuerelement (100) nach einem der vorherigen Ansprüche, **dadurch gekennzeichnet, dass** die Adapterplatte (7) einen elektrisch isolierenden Kunststoff, bevorzugt ein Harz, einen Thermoplasten oder einen Verbundwerkstoff enthält.

7. Feldsteuerelement (100) nach einem der vorherigen Ansprüche, **dadurch gekennzeichnet, dass** ein Isolator (12) mit dem Feldsteuerelement (100) verbindbar ist, wobei eine Grenzfläche zwischen dem Feldsteuerelement und dem Isolator oder der Isolatorplatte in einem Winkel zwischen 45° und 90° oder senkrecht zur Kabelachse verläuft.

8. Feldsteuerelement (100) nach einem der vorherigen Ansprüche, **dadurch gekennzeichnet, dass** eine Oberfläche, bevorzugt eine äussere Oberfläche des Feldsteuerelementes (100) ganz oder teilweise mit einer Schicht aus einem feldsteuernden Material mit nicht-linearem elektrischen Widerstand versehen ist.

9. Gasisolierte Schaltanlage umfassend ein Feldsteuerelement (100) nach einem der vorherigen Ansprüche.

10. Muffe für die Verbindung von Kabeln zur Energieübertragung, umfassend mindestens zwei Feldsteuerelemente nach einem der Ansprüche 1 bis 8.

11. Muffe nach Anspruch 10, **dadurch gekennzeichnet, dass** die Muffe mindestens zweitteilig aufgebaut ist.

12. Muffe nach einem der Ansprüche 10 bis 11, **dadurch gekennzeichnet, dass** die Muffe mindestens ein Zwischenstück beinhaltet, bevorzugt ein Zwischenstück mit einer Elektrode.

13. Modul für ein Feldsteuerelement umfassend einen elektrisch leitfähigen Innenteil, eine elektrische Isolierung, welche den Innenteil umfasst und einen mechanisch stabile Träger, **dadurch gekennzeichnet, dass** das Innenteil elektrisch mit einem Feldsteuerelement gemäss einem der Ansprüche 1 bis 8 verbindbar ist.

14. Modul nach Anspruch 13, **dadurch gekennzeichnet, dass** das Modul mit einem zweiten Modul nach Anspruch 13 verbindbar ist.

15. Modul nach einem der Ansprüche 13 bis 14, **dadurch gekennzeichnet, dass** das Feldsteuerelement und das mindestens eine Modul durch einen Adapter verbindbar sind.

## Claims

1. Field control element (100) for end terminations or sleeves of cables for energy transmission, wherein the field control element (100) has a main body (3), a deflector (5), at least one elastic electrode (6) and an opening for receiving a cable for energy transmission and wherein an end region of the cable facing the electrode (6) is stripped of insulation, **characterized in that** the field control element comprises an adapter plate (7) which is insulating at least in a radially outer region, wherein a conductive part (9) of the adapter plate (7) and/or the electrode (6) is/are designed so that they are able to enclose the stripped part of the cable within the field control element (100) radially over the full length thereof.

2. Field control element (100) according to Claim 1, **characterized in that** the electrically conductive part (9) of the adapter plate (7) is annular.

3. Field control element (100) according to either of the preceding claims, **characterized in that** the adapter plate (7) can be connected directly to the main body (3), wherein the main body (3) is preferably elastic.

4. Field control element (100) according to one of the preceding claims, **characterized in that** the adapter plate (7) is arranged at a distance from a cable insulation (2).

5. Field control element (100) according to one of the preceding claims, **characterized in that** the electrode (6) can be electrically connected to a conductor (1) of the cable.

6. Field control element (100) according to one of the preceding claims, **characterized in that** the adapter plate (7) contains an electrically insulating plastic, preferably a resin, a thermoplastic or a composite material.

7. Field control element (100) according to one of the preceding claims, **characterized in that** an insulator (12) can be connected to the field control element (100), wherein an interface between the field control element and the insulator or the insulator plate runs at an angle between 45° and 90° or perpendicular to the cable axis.

8. Field control element (100) according to one of the preceding claims, **characterized in that** a surface, preferably an outer surface of the field control element (100), is fully or partly provided with a layer composed of a field-controlling material with a nonlinear electrical resistance.

9. Gas-insulated switchgear assembly comprising a field control element (100) according to one of the preceding claims.

10. Sleeve for the connection of cables for energy transmission, comprising at least two field control elements according to one of Claims 1 to 8.

11. Sleeve according to Claim 10, **characterized in that** the sleeve is of at least two-part construction.

12. Sleeve according to one of Claims 10 to 11, **characterized in that** the sleeve contains at least one intermediate piece, preferably an intermediate piece having an electrode.

13. Module for a field control element comprising an electrically conductive inner part, an electrical insulation, which comprises the inner part, and a mechanically stable support, **characterized in that** the inner part can be electrically connected to a field control element according to one of Claims 1 to 8.

14. Module according to Claim 13, **characterized in that** the module can be connected to a second module according to Claim 13.

15. Module according to one of Claims 13 to 14, **characterized in that** the field control element and the at least one module can be connected by way of an adapter.

## Revendications

1. Élément de contrôle de champ (100) pour des boîtes d'extrémité ou des manchons de câbles servant à la transmission d'énergie, l'élément de contrôle de champ (100) possédant un corps principal (3), un déflecteur (5), au moins une électrode élastique (6) et une ouverture destinée à accueillir un câble servant à la transmission d'énergie et une zone d'extrémité du câble qui fait face à l'électrode (6) étant dénudée, **caractérisé en ce que** l'élément de contrôle de champ comprend une plaque d'adaptation (7) qui est isolante au moins dans une zone qui se trouve radialement à l'extérieur, une partie conductrice (9) de la plaque d'adaptation (7) et/ou l'électrode (6) étant configurée(s) de telle sorte qu'elle peut/peuvent entourer radialement la partie dénudée du câble à l'intérieur de l'élément de contrôle de champ (100) sur toute sa longueur.

2. Élément de contrôle de champ (100) selon la revendication 1, **caractérisé en ce que** la partie (9) électriquement conductrice de la plaque d'adaptation (7) est de forme annulaire.

3. Élément de contrôle de champ (100) selon l'une des revendications précédentes, **caractérisé en ce que** la plaque d'adaptation (7) peut être reliée directement au corps principal (3), le corps principal (3) étant de préférence élastique.

4. Élément de contrôle de champ (100) selon l'une des revendications précédentes, **caractérisé en ce que** la plaque d'adaptation (7) est disposée espacée d'une isolation de câble (2).

5. Élément de contrôle de champ (100) selon l'une des revendications précédentes, **caractérisé en ce que** l'électrode (6) peut être reliée électriquement à un conducteur (1) du câble.

6. Élément de contrôle de champ (100) selon l'une des revendications précédentes, **caractérisé en ce que** la plaque d'adaptation (7) contient une matière plastique électriquement isolante, de préférence une résine, un thermoplastique ou un matériau composite.

7. Élément de contrôle de champ (100) selon l'une des revendications précédentes, **caractérisé en ce qu'**un isolateur (12) peut être relié à l'élément de contrôle de champ (100), une surface de séparation entre l'élément de contrôle de champ et l'isolateur ou la plaque d'isolateur s'étendant selon un angle compris entre 45° et 90° ou perpendiculairement par rapport à l'axe du câble.

8. Élément de contrôle de champ (100) selon l'une des revendications précédentes, **caractérisé en ce qu'**une surface, de préférence une surface extérieure de l'élément de contrôle de champ (100), est entièrement ou partiellement pourvue d'une couche d'un matériau de contrôle de champ ayant une résistance électrique non linéaire.

9. Appareillage de commutation à isolation gazeuse comprenant un élément de contrôle de champ (100) selon l'une des revendications précédentes.

10. Manchon pour la liaison de câbles servant à la transmission d'énergie, comprenant au moins deux éléments de contrôle de champ selon l'une des revendications 1 à 8.

11. Manchon selon la revendication 10, **caractérisé en ce que** le manchon est constitué d'au moins deux parties.

12. Manchon selon l'une des revendications 10 à 11, **caractérisé en ce que** le manchon contient au moins une pièce intermédiaire, de préférence une pièce intermédiaire munie d'une électrode.

13. Module pour un élément de contrôle de champ comprenant une partie intérieure électriquement conductrice, une isolation électrique, laquelle englobe la partie intérieure et un élément porteur mécaniquement stable, **caractérisé en ce que** la partie intérieure peut être reliée électriquement à un élément de contrôle de champ selon l'une des revendications 1 à 8.

14. Module selon la revendication 13, **caractérisé en ce que** le module peut être relié à un deuxième module selon la revendication 13.

15. Module selon l'une des revendications 13 à 14, **caractérisé en ce que** l'élément de contrôle de champ et l'au moins un module peuvent être reliés par un adaptateur.
